# EUROPEAN PATENT SPECIFICATION

(11) **EP 2 830 174 B1**
(45) Date of publication and mention of the grant of the patent: **09.05.2018**
(21) Application number: 14275154.4
(22) Date of filing: 21.07.2014
(51) Int. Cl.: H02G 3/04, H02G 3/06

(54) **CABLE TRAY COUPLING DEVICE**
KABELKANALKUPPLUNGSVORRICHTUNG
DISPOSITIF DE COUPLAGE DE CHEMIN DE CÂBLES

(30) Priority: 24.07.2013 GB 201313200
(43) Date of publication of application: 28.01.2015
(73) Proprietor: Marco Gearing Limited, Llangefni, Anglesey LL77 7XA (GB)
(72) Inventor: Austin, Grahame, Anglesey, LL77 7XA (GB)
(74) Representative: Whitfield, Gillian Janette

(56) References cited:
- EP-A1- 1 318 585
- DE-A1- 2 036 325
- DE-U1- 29 700 613
- FR-A1- 2 857 789

## Description

### Field of the Invention

The present invention relates to a coupling device, in particular to a coupling device for connecting wire cable trays together, and to a cable support system comprising a plurality of wire cable trays and at least one coupling device.

### Background of the Invention

Cable support systems are conventionally used during installation of cables within a building to guide and hold cables in the required position. Cable support systems typically comprise a plurality of cable trays and a coupling device for joining the trays together. Conventional cable trays comprise elongated tray members having a shallow U-shaped cross-section. Conventional cable trays comprise a plurality of wires extending parallel to the longitudinal axis of the elongate tray member and a plurality of wires extending substantially perpendicular to the longitudinal axis of the elongate tray member. During installation, the cable trays are aligned and connected together by one or more coupling devices. The coupling devices are conventionally secured to or between adjacent wires extending parallel to the longitudinal axes of each of the adjacent elongate tray members.

A large range of cable support systems, cable trays and coupling devices are available. An example of one such conventional coupling device according to the preamble of claim 1 is disclosed in EP 1 318 585. The spacings between the wires and wire dimensions are different for each type of cable tray. The coupling device may fail to engage to a tray if there is for any reason any variation in wire spacings and/or wire diameters. There is a need for a coupling device providing a greater tolerance for the spacing between wires of a cable tray. There is also a need for a coupling device capable or of retaining a first wire in position within the coupling device during engagement of the coupling device to an adjacent wire. Another need is for a quick and simple manual operation, without the aid of additional tools or aids (speed up installation, reduces labour time on the installation).

### Summary of the Invention

According to a first aspect of the present invention, there is provided a coupling device assembly for connecting at least two adjacent cable trays together, in which the assembly comprises:
a coupling device comprising a first end, a second end, and a cable tray end engagement portion located between the first and second ends, in which the cable tray end engagement portion is adapted to receive adjacent ends of the first and second cable trays; and
at least one rotatable engagement member located at at least one of the first and second ends of the coupling device;
in which the at least one rotatable engagement member is rotatable relative to the coupling device between a first disengaged position in which the at least one rotatable engagement member is arranged to be disengaged from an adjacent cable tray, and a second engaged position in which the at least one rotatable engagement member is arranged to engage an adjacent cable tray; and
in which the coupling device has a longitudinal axis extending in a direction extending between the first and second ends of the coupling device, and in which the rotatable engagement member has a longitudinal axis extending between a first end and a second opposed end, and in which in the first disengaged position of the coupling device assembly, the longitudinal axis of the rotatable engagement member is substantially aligned with the longitudinal axis of the coupling device, and in which in the second engaged position, the longitudinal axis of the rotatable engagement member is not aligned with the longitudinal axis of the coupling device.

The coupling device assembly of the present invention is adapted to connect two adjacent cable trays together in an end-to-end formation. The cable trays are preferably wire cable trays. The cable trays comprise a plurality of elongate members. The elongate members are preferably wires. A cable system may comprise a plurality of cable trays joined together in any suitable formation, preferably in an end-to-end formation.

The cable tray preferably comprises at least two, for example a plurality of, spaced apart elongate members. The spacing between adjacent elongate members is preferably, but not necessarily, uniform throughout the cable tray. The elongate members preferably extend substantially parallel to each other.

The coupling device assembly is preferably adapted to engage two spaced apart elongate members of each adjacent cable tray. The first or second end of the coupling device may be adapted to engage two spaced apart elongate members, for example wires, of an adjacent cable tray. The rotatable engagement member(s) may in the second engaged position be adapted to engage two spaced apart of elongate members, for example wires, of a cable tray

The coupling device assembly, for example the first or second end or the rotatable engagement member, is preferably adapted to engage two adjacent spaced apart elongate members of each adjacent cable tray.

The tray may further comprise at least one further elongate member which does not engage with the coupling device assembly and extends between, for example in a longitudinal direction, the two spaced apart elongate members. The at least two elongate members may be provided by an upper portion and a lower portion of a single elongate member extending along the longitudinal axis of the tray. For example, the at least two elongate members may be provided by an upper portion and a lower portion of an elongate sheet portion extending along the longitudinal axis of the tray.

One end of the coupling device is preferably adapted to engage an adjacent cable tray, and the rotatable engagement member is preferably located at the other end of the coupling device to engage an adjacent cable tray. For example one end of the coupling device is adapted to engage two adjacent spaced apart elongate members of an adjacent cable tray.

The rotatable engagement member and the coupling device may be integrally formed or may be provided as two separate components for mutual engagement.

The coupling device comprises a base section extending between the first and second ends of the device. The rotatable engagement member is preferably rotatable about an axis relative to the coupling device. The rotatable engagement member is preferably rotatable about an axis extending at an angle, for example substantially perpendicular, to the plane of the coupling device. The plane of device is referred to herein as being the plane along which the majority of the base section of the coupling device extends.

The rotatable engagement member and the coupling device may be provided as two separate components for mutual engagement. At least one of the first and second ends of the coupling device preferably comprises at least one engagement feature for mutual engagement with at least one engagement feature provided by the rotatable engagement member. For example, one of the first and second ends of the coupling device is adapted to engage two spaced apart elongate members of a cable tray, and the other end comprises at least one engagement feature for mutual engagement with at least one engagement feature provided by the rotatable engagement member.

The engagement features of the first and/or second ends and the rotatable engagement member(s) may be any suitable combination of complementary features, such as for example projections, pins, ridges, grooves and/or holes which are arranged to provide mutual engagement between the first and/or second ends of the device and the rotatable engagement member while also enabling rotation of the rotatable engagement member relative to the coupling device. For example, the coupling device may provide at least one groove, for example an arcuate groove for receiving at least one pin of the rotatable engagement member. The coupling device may provide two spaced apart grooves, for example arcuate grooves. Each groove may be arranged to receive a pin of the rotatable engagement member. The length of the groove(s) determines the maximum extent of rotation of the rotatable engagement member relative to the coupling device. The shape of the groove(s) determines the angle of rotation of the rotatable engagement member relative to the coupling device.

The longitudinal axis of the coupling device extends in a direction extending between the first and second ends of the coupling device.

The rotatable engagement member preferably comprises a first end and a second opposed end. The longitudinal axis of the rotatable engagement member extends between the first and second ends of the rotatable engagement member.

In the first disengaged position of the coupling device assembly, the longitudinal axis of the rotatable engagement member is substantially aligned with the longitudinal axis of the coupling device. In the second engaged position, the longitudinal axis of the rotatable engagement member extends at an angle, for example substantially perpendicular, to the longitudinal axis of the coupling device.

The coupling device further comprises a pair of opposed side portions extending between the first and second ends of the device. A first side portion preferably extends between a first edge of the first end of the device and a first edge of the second end of the device. A second side portion preferably extends between a second edge of the first end of the device and a second edge of the second end of the device. The first and second side portions may extend substantially parallel to each other. Alternatively, the first and second side portions may be individually contoured depending on the desired use of the coupling device.

The width of the coupling device may be uniform along the longitudinal axis of the coupling device. The width of the coupling device at one end of the device may be greater than the width at the other end of the device. For example, the width of the first end of the device may be greater than the width of the second end of the device. The width of the end of the device which is arranged to engage the rotatable engagement member is preferably less than the width of the other end of the device. For example, a first end of the device may have a width suitable for extending between and engaging two elongate members, such as for example an adjacent pair of cables, of a cable tray. The second end of the device may have a width which is less than the separation between an adjacent pair of elongate members, such as for example cables. The second end of the cable device may be arranged to engage the rotatable engagement member.

The rotatable engagement member further comprises a pair of opposed side portions extending between the first and second ends of the member. A first side portion preferably extends between a first edge of the first end of the rotatable engagement member and a first edge of the second end of the rotatable engagement member. A second side portion preferably extends between a second edge of the first end of the rotatable engagement member and a second edge of the second end of the rotatable engagement member.

The term "width" is used herein in terms of the coupling device and the rotatable engagement member to be the dimension measured in a direction extending between the first and second side portions in a direction substantially perpendicular to the longitudinal axis of the device.

The length of the rotatable engagement member, as measured in a direction extending substantially parallel to the longitudinal axis of the rotatable engagement member, is preferably greater than the width of the adjacent portion, for example the first and/or second end, of the coupling device at the location of the rotatable engagement member. It is to be appreciated that the length of the rotatable engagement member will depend upon the spacing between adjacent elongate members, for example wires, of the cable trays which are to be engaged by the rotatable engagement member.

The width of the rotatable engagement member is preferably equal to or less than the width of the adjacent portion, for example the first and/or second end, of the coupling device at the location of the rotatable engagement member.

In the disengaged position, the side portions of the rotatable engagement member preferably do not extend beyond the side portions of the adjacent portion, for example the first and/or second end, of the coupling device at the location of the rotatable engagement member.

In the engaged position, at least one of the first and second ends of the rotatable engagement member preferably extends beyond the first and/or second side portions of the adjacent portion, for example the first and/or second ends, of the coupling device at the location of the rotatable engagement member. Preferably, both of the first and second ends of the rotatable engagement member extend beyond the first and second side portions of the adjacent portion of the coupling device at the location of the rotatable engagement member.

The rotatable engagement member may provide an opening shaped and dimensioned to receive an operating tool, such as for example a screw driver, for rotation of the rotatable engagement member relative to the coupling device. For example, the opening may be cross-shaped to receive a cross-headed screw driver. Rotation of the operating tool therefore enables rotation of the rotatable engagement member relative to the coupling device.

The rotatable engagement portion preferably comprises at least one engagement feature for engaging an elongate member, for example a wire, of a cable tray in the engaged position. The rotatable engagement portion preferably comprises a base section extending between the first and second ends of the portion. At least one first engagement feature is preferably located at the first end of the rotatable engagement member. At least one second engagement feature is preferably located at the second end of the rotatable engagement member. Preferably, at least one of, for example each of, the first and second ends of the rotatable engagement member provides a plurality of spaced apart engagement features.

At least one end of the coupling device comprises at least one engagement feature for engaging an elongate member of a cable tray. The coupling device preferably comprises a base section extending between the first and second ends of the device. At least one engagement feature is preferably located at or adjacent a first side portion at or adjacent at least one end of the device. Preferably, at least one end of the device comprises at least one pair of engagement features located on opposing side portions of the device. For example the device may comprise a first engagement feature located at or adjacent a first side portion and a second engagement feature located at or adjacent a second side portion at or adjacent an end of the device. The first and second engagement features are preferably located at or adjacent an end of the coupling device. At least one of, for example each of, the first and second side portions at or adjacent an end of the coupling device may provide a plurality of spaced apart engagement features.

The engagement features are preferably each adapted to engage an elongate member such as for example a wire of the cable tray.

The engagement feature(s) may extend from a first face of a base section of the rotatable engagement member or from a first face of a base section at or adjacent an end of the device at any angle suitable for engagement with the elongate members, for example cables, of the trays. Preferably, the engagement feature(s) extends at an obtuse angle from the base section defining an open mouth shaped to receive an elongate member, such as for example a wire. The engagement feature(s) may for example extend substantially perpendicular relative to a first face of the base section. The engagement feature(s) may be any suitable shape for retaining the elongate member(s). For example the engagement feature(s) may be substantially flat or may comprise a curved portion. The engagement feature(s) may for example comprise a curved portion providing a neck to retain an elongate member.

The coupling device may further comprise at least one retaining feature for retaining the rotatable engagement member in the second engaged position. The rotatable engagement member may comprise at least one alignment feature for mutual engagement with the at least one retaining feature of the coupling device. The retaining feature(s) of the coupling device is preferably located such that in the second engaged position the retaining feature(s) is aligned with the alignment feature(s) provided by the rotatable engagement member. The retaining feature(s) is preferably located at or adjacent an end of the coupling device. It is to be appreciated that the retaining feature may be provided by any suitable feature for securing the rotatable engagement member in position. For example, the coupling device may comprise at least one protrusion or hook shaped and dimensioned to be received within at least one opening provided by the rotatable engagement member. The rotatable engagement member may provide a plurality of, for example two, spaced apart openings. Tor example the rotatable engagement member may provide two openings located on opposing sides of the rotatable engagement member. The coupling device may comprise a plurality of, for example two. spaced apart protrusions or hooks arranged for engagement with the openings of the rotatable engagement member.

The retaining feature is arranged to retain the rotatable engagement member in a locked position. The retaining feature is arranged to release the rotatable engagement member on application of a disengaging force greater than a predetermined value. The disengaging force may for example be a rotational force applied by the user.

The cable tray may further comprise at least one elongate member extending at an angle to the longitudinal axis of the tray. For example, the cable tray may further comprise at least one elongate member extending within a transverse plane of the tray. The cable tray(s) may comprise at least one elongate member extending within a transverse plane of the tray and have a substantially U-shape so as to form a base surface of the tray and two opposed side surfaces. The tray preferably comprises a plurality of spaced apart elongate members extending within a transverse plane of the tray. Preferably, but not necessarily the spacing between adjacent elongate members extending within a transverse plane is uniform along the tray. The tray(s) preferably comprise an elongate member extending within a transverse plane located at or adjacent an end of the tray. Preferably, an elongate member extending within a transverse plane is located at or adjacent each end of the tray.

The cable end engagement portion of the coupling device preferably provides at least one opening or channel for receiving at least one elongate member located at an end of at least one tray, for example the elongate members at adjacent ends of adjacent trays. The cable end engagement portion preferably provides at least one opening or channel for receiving an elongate member extending within a transverse plane of the tray located at the end(s) of a or each tray. The cable end engagement portion may further comprise at least one engagement feature for engaging an elongate member extending within a transverse place of the tray located at the ends of the tray. The at least one engagement feature may be located within the opening(s) or channel(s) of the cable end engagement portion. The engagement feature may be any suitable feature for retaining the elongate member within the portion. The at least one engagement feature may for example comprise a curved portion. The curved portion may provide a neck to retain an elongate member. The cable end engagement portion may comprise an engagement feature arranged to engage each elongate member extending within a transverse place of a tray located at the end of an adjacent tray.

The cable end engagement portion may provide a spring mechanism for facilitating the engagement of the coupling device to the cable trays.

The cable end engagement feature may be located in any suitable location, for example centrally with respect to the first and/or second ends of the coupling device.

The base section of the coupling device and the rotatable engagement member may have any suitable shape for engaging the cable trays. The base section(s) may be substantially planar. For example, the base section(s) may have a predominantly square or rectangular cross-section. Alternatively, the base section may be curved or contoured where appropriate, for example in order to correspond to the surface of the cable tray(s).

The coupling device assembly may be composed of any suitable materials, such as for example steel, preferably pre-galvanised steel or sprung steel, or combinations thereof. The coupling device and the rotatable engagement member may be composed of the same material or of different materials.

According to a further aspect of the present invention, there is provided cable tray system comprising:
at least two cable trays, in which each cable tray comprises at least a pair of adjacent elongate members extending along the longitudinal axis of the tray; and
at least one coupling device assembly as described herein, in which said coupling device assembly is arranged to engage each cable tray.

According to a still further aspect of the present invention, there is provided a method of connecting two cable trays together comprising:
aligning two cable trays together in an end-to-end arrangement such that at least a pair of adjacent elongate members of each cable tray are aligned;
engaging a coupling device assembly as described herein with elongate members of each adjacent cable tray.

At least one end of the coupling device may be engaged with the elongate members of a tray by rotating at least one rotatable engagement member of the device.

Preferably, the coupling device comprises an end having a width which is less than the separation between adjacent elongate members of a cable tray. During the method of connecting the trays, a first end of the coupling device engages elongate members of a first cable tray. The second end of the coupling device, preferably having reduced width compared to the first end of the coupling device, may be inserted through the gap between adjacent elongate members of a second cable tray. The second end of the coupling device is preferably engaged to the rotatable engagement member of the assembly. The rotatable engagement member may be rotated relative to the second end of the coupling device from the first disengaged position to the second engaged position to engage the adjacent elongate members of a second cable tray.

According to a still further aspect of the present invention, there is provided a kit for a cable tray system comprising:
at least two cable trays, each cable tray comprising at least two elongate members extending parallel to the longitudinal axis of the tray; and
at least one coupling device assembly as herein described.

### Brief Description of the Drawings

An embodiment of the invention will now be described, by way of example only, and with reference to the accompanying drawings, in which:
Figure 1 illustrates a schematic view of a cable tray system according to one embodiment of the invention;
Figure 2 illustrates a view from above of the cable tray system of Figure 1 in the second engaged position;
Figure 3 illustrates a schematic view of the coupling device assembly of the cable tray system of Figure 1 in the second engaged position;
Figure 4 illustrates a cross-sectional view of the coupling device of the cable tray system of Figure 1 in the first disengaged position;
Figure 5 illustrates a perspective view of the coupling device of Figure 4;
Figure 6 illustrates a schematic view from above of the coupling device of Figure 4; and
Figure 7 illustrates a schematic view of the coupling device of the cable tray system of Figure 1 in the first disengaged position.

### Detailed Description of the Invention

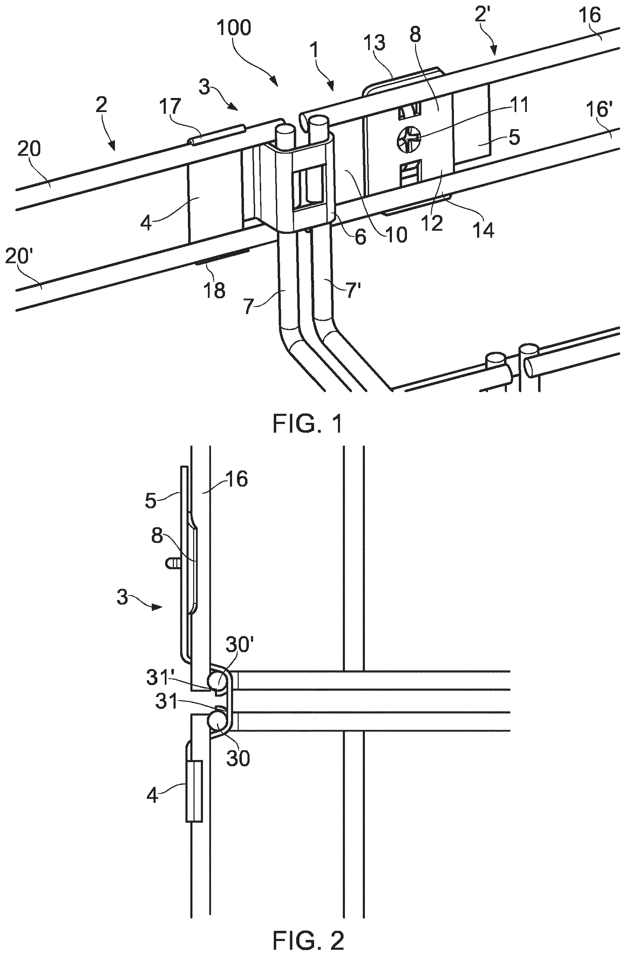

Figures 1 and 2 illustrate one embodiment of the cable tray system of the present invention. The cable tray system 100 comprises a coupling device assembly 1 and two cable trays 2,2'. The coupling device assembly 1 comprises a coupling device 3 comprising a first end 4, a second end 5, and a cable tray end engagement portion 6 located between the first 4 and second ends 5.

The cable tray end engagement portion 6 is adapted to receive adjacent ends 7,7' of the first and second cable trays 2,2'. The coupling device assembly 1 further comprises a rotatable engagement member 8 which is located at the second end 5 of the coupling device 3. The coupling device 3 and the rotatable engagement member 8 are provided as two separate components which are arranged for mutual engagement.

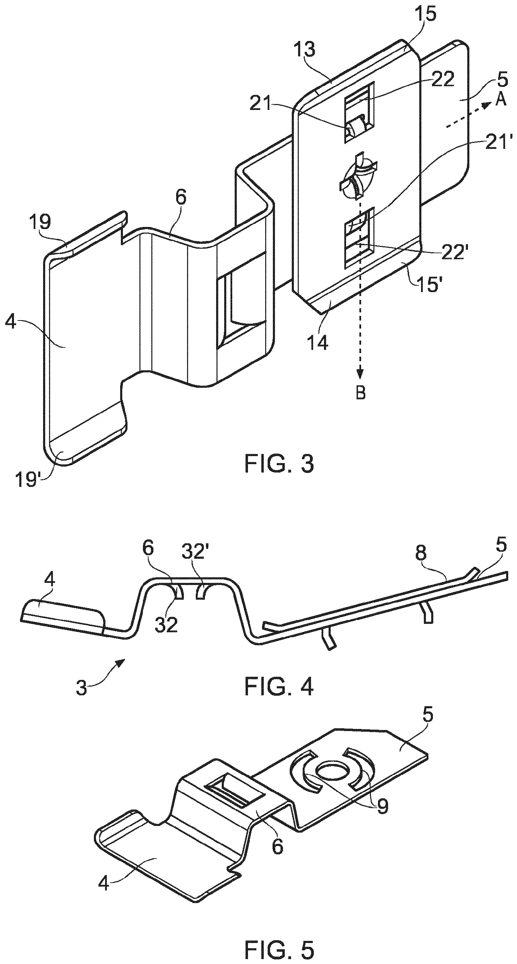

As shown in Figures 4 and 5, the second end 5 of the coupling device 3 provides two spaced apart arcuate grooves 9. The rotatable engagement member 8 comprises two spaced apart pins (not shown) shaped and dimensioned to be received and retained within the arcuate grooves 9 of the coupling device 3.

The rotatable engagement member 8 is rotatable relative to the second end 5 of the coupling device 3 between a first disengaged position (not shown) in which the rotatable engagement member 8 is disengaged from the adjacent cable tray 2' and a second engaged position (as shown in Figure 1) in which the rotatable engagement member 8 is arranged to engage the cable tray 2'.

The coupling device 3 comprises a base section 10 extending between the first 4 and second 5 ends of the device 3. The plane of the device 3 is defined as the plane along which the majority of the base section 10 extends. The rotatable engagement member 8 is arranged to be rotatable about an axis extending substantially perpendicular to the plane 10 of the coupling device 3.

The rotatable engagement member 8 provides a cross-shaped opening 11 shaped and dimensioned to receive a cross-headed screwdriver for rotation of the rotatable engagement member 8 relative to the coupling device 3.

The rotatable engagement portion 8 has a base section 12 and a pair of opposed ends, a first end 13 and a second end 14. Each end 13, 14 comprises an engagement feature 15,15' for engaging an elongate member 16, 16' of an adjacent cable tray 2'. As shown in Figure 3, the engagement features 15,15' extend at an obtuse angle to the base section 12 of the rotatable engagement portion 8.

The coupling device 3 comprises a base section 10 and a pair of opposed side portions 17, 18 extending between the first 4 and second 5 ends of the device 3. Each side portion 17, 18 provides an engagement feature 19,19' for engaging an elongate member 20,20' of the adjacent cable tray 2. The engagement features 19,19' are located adjacent the first end 4 of the device 3. As shown in Figure 3, the engagement features 19,19' extend at an obtuse angle to the base section 16 of the coupling device 3.

The rotatable engagement member 8 provides two spaced apart openings 22,22'. The second end 5 of the coupling device 3 further comprises two spaced apart retaining features 21,21' which are located, shaped and dimensioned so as to engage the openings 22,22' of the rotatable engagement member 8 in the second engaged position.

The retaining features 21,21' of the coupling device 3 are arranged to release the rotatable engagement member 8 on application of a disengaging force greater than a predetermined value. The disengaging force may be applied in any suitable direction. Preferably, the disengaging force is a rotational force. The rotational force is preferably applied in a direction to return the rotational engagement member 8 to the first disengaged position. It is however to be appreciated that the retaining features 21,21' may be disengaged by any other suitable release mechanism.

The coupling device 3 has a longitudinal axis A extending in a direction extending between the first 4 and second 5 ends of the coupling device 3. The rotatable engagement member 8 has a longitudinal axis B extending between a first end 13 and a second opposed end 14.

The length of the rotatable engagement member 8, as measured in a direction extending substantially parallel to the longitudinal axis B of the rotatable engagement member 8, is greater than the width of the second end 5 of the coupling device 5 to which the rotatable engagement member 8 is engaged.

The width of the rotatable engagement member 8 is less than the width of the second end 5 of the coupling device 3 to which the rotatable engagement member 8 is engaged. The second end 5 of the coupling device 3 has a width which is less than the spacing between adjacent elongate members of the tray.

The cable end engagement portion 6 of the coupling device 3 provides a channel for receiving an elongate member 30, 30' located at an end of each tray 2,2'. The elongate members 30,30' extend within a transverse plane of the tray. The cable end engagement portion 6 further comprises two engagement features 31,31'. Each engagement feature 31,31' is arranged to engage an elongate member of a tray 2,2'. The engagement features 31,31' comprise a curved portion 32,32' providing a neck to retain an elongate member 30,30'.

The cable end engagement portion 6 is shaped and dimensioned and composed of suitable material so as to provide a spring mechanism for facilitating the engagement of the coupling device 3 to the cable trays 2,2'.

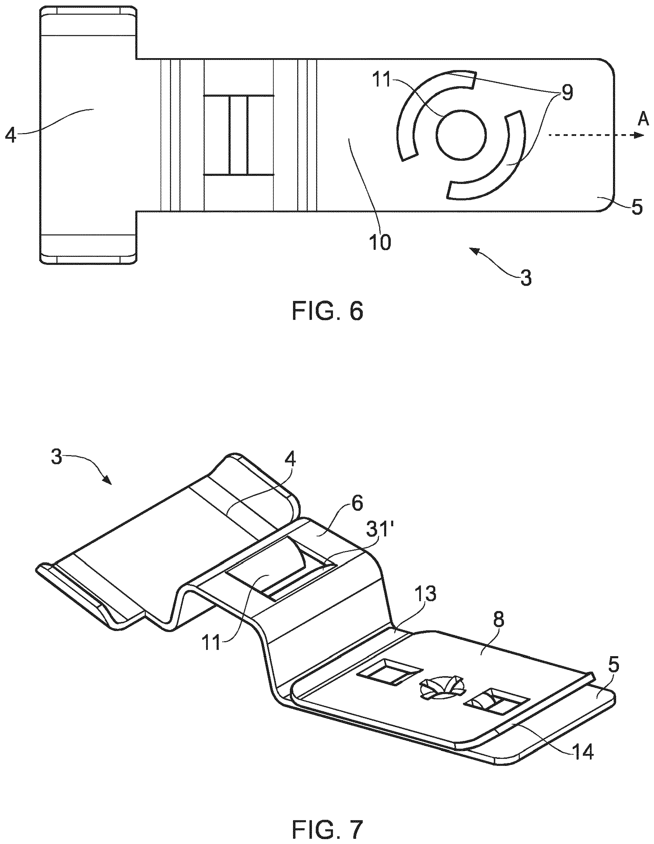

In use, the coupling device assembly 1 is placed in the disengaged position as illustrated in Figure 7. In the disengaged position, the coupling device 3 and rotatable engagement member 8 are arranged such that the longitudinal axis B of the rotatable engagement member 8 is substantially aligned with the longitudinal axis A of the coupling device 3.

The first end 4 of the coupling device 3 is placed into engagement with the elongate members of the first cable tray 2. The engagement features 19,19' of the first end 4 of the coupling device engage the elongate members 20,20' of the tray 2. The elongate members 30,30' at the ends of each tray 2 are received within the cable tray end engagement portion 6. The second end 5 of the device 3 is inserted through the spacing between an adjacent pair of elongate members 16,16'.

The user then inserts a cross-headed screw driver into the cross-shaped opening 11 provided by the rotatable engagement member 8. Rotation of the screw driver rotates the rotatable engagement member 8 from the disengaged position to the second engaged position as shown in Figure 1.

During rotation of the rotatable engagement member 8, the pins of the rotatable engagement member 8 are moved along the grooves 9 of the second end 5 of the device 3. The rotatable engagement member 8 is rotated until the retaining features 21,21' engage the openings 22,22' provided by the rotatable engagement member 8.

In the second engaged position the longitudinal axis B of the rotatable engagement member 8 extends substantially perpendicular to the longitudinal axis A of the coupling device 3. The retaining features 21,21' of the coupling device 3 secure the rotatable engagement member 8 in the second engaged position.

The first 13 and second 14 ends of the rotatable engagement member 8 extend beyond the first and second side portions 17,18 of the second end 5 of the coupling device 3. Elongate members 16,16' of the tray 2' are received within and engage engagement features 15,15' provided by the ends 13,14 of the rotatable engagement member 8.

The retaining features 21,21' secure the assembly 1 in the second engaged position until sufficient force above a predetermined value is applied to the rotatable engagement member 8. For example, if the user wishes to uncouple the trays 2,2' the user may apply a rotational force in the opposite direction to the initial rotational direction. The rotational force for uncoupling the assembly from the trays must be above a predeteremined value in order to return the rotatable engagement member 8 to the first disengaged state. On application of sufficient rotational force, the retaining features 21,21' will be released from the openings 22,22' provided by the rotatable engagement member 8. The pins of the rotatable engagement member 8 will be moved within the grooves 9 provided by the second end 5 of the device 3 in the opposing direction to return the rotatable engagement member 8 to the first disengaged position.

The rotatable engagement member 8 will be rotated until the longitudinal axis B of the rotatable engagement member 8 is substantially aligned with the longitudinal axis A of the coupling device 3.

The second end 5 of the device 3 can then be removed through the spacing provided between the adjacent elongate members 16,16'. The elongate members at the ends of the trays 2,2' may be removed from the cable tray end engagement portion 6. The first end 4 of the device 3 may then be uncoupled from the elongate members of the other tray 2.

Although aspects of the invention have been described with reference to the embodiment shown in the accompanying drawings, it is to be understood that the invention is not limited to the precise embodiment shown and that various changes and modifications may be effected without further inventive skill and effort.

## Claims

1. A coupling device (1) assembly for connecting at least two adjacent cable trays together, in which the assembly comprises:
a coupling device (3) comprising a first end (4), a second end (5), and a cable tray end engagement portion (6) located between the first and second ends (4,5), in which the cable tray end engagement portion (6) is adapted to receive adjacent ends of the first and second cable trays; and
at least one rotatable engagement member (8) located at at least one of the first and second ends (4.5) of the coupling device (3);
in which the at least one rotatable engagement member (8) is rotatable relative to the coupling device (3) between a first disengaged position in which the at least one rotatable engagement member (8) is arranged to be disengaged from an adjacent cable tray, and a second engaged position in which the at least one rotatable engagement member (8) is arranged to engage an adjacent cable tray; **characterized in that** the coupling device (3) has a longitudinal axis extending in a direction extending between the first and second ends (4,5) of the coupling device (3), and in which the rotatable engagement member (8) has a longitudinal axis extending between a first end and a second opposed end, and in which in the first disengaged position of the coupling device assembly (1), the longitudinal axis of the rotatable engagement member (8) is substantially aligned with the longitudinal axis of the coupling device (3), and in which in the second engaged position, the longitudinal axis of the rotatable engagement member (8) is not aligned with the longitudinal axis of the coupling device (3).

2. An assembly (1) as claimed in claim 1, in which the rotatable engagement member (8) and the coupling device (3) are provided as two separate components for mutual engagement.

3. An assembly (1) as claimed in either of claims 1 and 2, in which the coupling device (3) comprises a base section (10) extending between the first and second ends (4,5), in which the base section (10) defines a plane, and in which the rotatable engagement member (8) is rotatable about an axis extending substantially perpendicular to the plane of the coupling device (3).

4. An assembly (1) as claimed in any preceding claim in which the coupling device (3) further comprises a pair of opposed side portions (17,18) extending between the first and second ends of the device (3), and in the engaged position, at least one of the first and second ends (4,5) of the rotatable engagement member (8) extend beyond the first and/or second side portions (17,18) of the adjacent portion of the coupling device (1) at the location of the rotatable engagement member (8).

5. An assembly (1) as claimed in any preceding claim, in which the rotatable engagement portion (8) comprises at least one engagement feature (15) for engaging at least one elongate member (16) of a cable tray in the engaged position.

6. An assembly (1) as claimed in any preceding claim, in which the coupling device (1) comprises at least one engagement feature (15) at or adjacent at least one end of the device (1).

7. An assembly (1) as claimed in claim 6, in which the coupling device (3) comprises a pair of opposed side portions (17,18) extending between the first and second ends (4,5) of the device (3), and in which the device (3) comprises at least one engagement feature (15) located on at least one side portion (17,18) at or adjacent at least one end of the device (3).

8. An assembly (1) as claimed in any one of claims 5 to 7, in which the engagement feature(s) (15) defines an open mouth shaped to receive an elongate member.

9. An assembly (1) as claimed in any preceding claim, in which the coupling device (3) further comprises at least one retaining feature (21) for retaining the rotatable engagement member (8) in the second engaged position.

10. An assembly (1) as claimed in claim 9, in which the rotatable engagement member (8) comprises at least one alignment feature for mutual engagement with the at least one retaining feature (21) of the coupling device (3).

11. A cable tray system (1) comprising:
at least two cable trays (2,2'), in which each cable tray (2,2') comprises at least a pair of adjacent elongate members (16,16') extending along the longitudinal axis of the tray (2,2'); and
at least one coupling device assembly (1) as claimed in any one of claims 1 to 10, in which said coupling device assembly (1) is arranged to engage each cable tray (2,2').

12. A method of connecting two cable trays (2,2') together comprising:
aligning two cable trays (2,2') together in an end-to-end arrangement such that at least a pair of adjacent elongate members (16,16') of each cable tray (2,2') are aligned; and
engaging a coupling device assembly (1) as claimed in any one of claims 1 to 10 with elongate members (16,16') of each adjacent cable tray (2,2').

13. A kit for a cable tray system comprising:
at least two cable trays (2,2'), each cable tray comprising at least two elongate members (16,16') extending parallel to the longitudinal axis of the tray (2,2'); and at least one coupling device assembly (1) as claimed in any one of claims 1 to 10.

## Patentansprüche

1. Eine Kopplungsvorrichtungs-Baugruppe (1) zum Verbinden von mindestens zwei benachbarten Kabelrinnen miteinander, wobei die Baugruppe Folgendes aufweist:
eine Kopplungsvorrichtung (3) mit einem ersten Ende (4), einem zweiten Ende (5) und einen zwischen dem ersten und dem zweiten Ende (4, 5) angeordneten Kabelrinnen-Endeingriffsabschnitt (6), wobei der Kabelrinnen-Endeingriffsabschnitt (6) so ausgebildet ist, dass er benachbarte Enden der ersten und zweiten Kabelrinne aufnimmt; und
mindestens ein drehbares Eingriffselement (8), das am ersten Ende (4) und/oder zweiten Ende (5) der Kopplungsvorrichtung (3) angeordnet ist;
wobei das mindestens eine drehbare Eingriffselement (8) relativ zur Kopplungsvorrichtung (3) zwischen einer ersten gelösten Position, in der das mindestens eine drehbare Eingriffselement (8) so angeordnet ist, dass es von einer benachbarten Kabelrinne gelöst werden kann, und einer zweiten Eingriffsposition drehbar ist, in der das mindestens eine drehbare Eingriffselement (8) so angeordnet ist, dass es in eine benachbarte Kabelrinne eingreift; **dadurch gekennzeichnet, dass** die Kopplungsvorrichtung (3) eine Längsachse aufweist, die sich in einer Richtung erstreckt, die zwischen dem ersten Ende (4) und dem zweiten Ende (5) der Kopplungsvorrichtung (3) verläuft, und wobei das drehbare Eingriffselement (8) eine Längsachse aufweist, die zwischen einem ersten Ende und einem zweiten gegenüberliegenden Ende verläuft, und wobei in der ersten gelösten Position der Kopplungsvorrichtungs-Baugruppe (1) die Längsachse des drehbaren Eingriffselements (8) im Wesentlichen mit der Längsachse der Kopplungsvorrichtung (3) ausgerichtet ist, und wobei in der zweiten Eingriffsposition die Längsachse des drehbaren Eingriffselements (8) nicht mit der Längsachse der Kopplungsvorrichtung (3) ausgerichtet ist.

2. Baugruppe (1) gemäß Anspruch 1, bei der das drehbare Eingriffselement (8) und die Kopplungsvorrichtung (3) als zwei getrennte Komponenten für den gegenseitigen Eingriff vorgesehen sind.

3. Baugruppe (1) gemäß einem der Ansprüche 1 und 2, bei der die Kopplungsvorrichtung (3) einen Basisabschnitt (10) aufweist, der sich zwischen dem ersten Ende (4) und dem zweiten Ende (5) erstreckt, wobei der Basisabschnitt (10) eine Ebene definiert, und wobei das drehbare Eingriffselement (8) um eine Achse drehbar ist, die sich im Wesentlichen senkrecht zur Ebene der Kopplungsvorrichtung (3) erstreckt.

4. Baugruppe (1) gemäß einem der vorhergehenden Ansprüche, bei der die Kopplungsvorrichtung (3) darüber hinaus ein Paar entgegengesetzter Seitenteile (17, 18) aufweist, die sich zwischen dem ersten und dem zweiten Ende der Vorrichtung (3) erstrecken, und in der Eingriffsposition das erste Ende (4) und/oder das zweite Ende (5) des drehbaren Eingriffselements (8) über die ersten und/oder zweiten Seitenteile (17, 18) des benachbarten Abschnitts der Kopplungsvorrichtung (1) an der Stelle des drehbaren Eingriffselements (8) hinaus verlaufen.

5. Baugruppe (1) gemäß einem der vorhergehenden Ansprüche, bei der der drehbare Eingriffsabschnitt (8) mindestens ein Eingriffsmerkmal (15) zum Eingriff in mindestens ein längliches Element (16) einer Kabelrinne in der Eingriffsposition aufweist.

6. Baugruppe (1) gemäß einem der vorhergehenden Ansprüche, bei der die Kopplungsvorrichtung (1) mindestens ein Eingriffsmerkmal (15) an oder neben mindestens einem Ende der Vorrichtung (1) aufweist.

7. Baugruppe (1) gemäß Anspruch 6, bei der die Kopplungsvorrichtung (3) ein Paar entgegengesetzte Seitenabschnitte (17, 18) aufweist, die sich zwischen dem ersten Ende (4) und dem zweiten Ende (5) der Vorrichtung (3) erstrecken, und bei der die Vorrichtung (3) mindestens ein Eingriffsmerkmal (15) aufweist, das an mindestens einem Seitenabschnitt (17, 18) an oder neben mindestens einem Ende der Vorrichtung (3) angeordnet ist.

8. Baugruppe (1) gemäß einem der Ansprüche 5 bis 7, bei der das/die Eingriffsmerkmal/e (15) eine offene Öffnung definiert/definieren, die ausgebildet ist, um ein längliches Element aufzunehmen.

9. Baugruppe (1) gemäß einem der vorhergehenden Ansprüche, bei der die Kopplungsvorrichtung (3) darüber hinaus mindestens ein Rückhalteglied (21) zum Zurückhalten des drehbaren Eingriffselements (8) in der zweiten Eingriffsposition aufweist.

10. Baugruppe (1) gemäß Anspruch 9, bei der das drehbare Eingriffselement (8) mindestens ein Ausrichtmerkmal zum gegenseitigen Eingriff mit dem mindestens einen Rückhalteglied (21) der Kopplungsvorrichtung (3) aufweist.

11. Ein Kabelrinnen-System (1), das Folgendes aufweist:
mindestens zwei Kabelrinnen (2, 2'), wobei jede Kabelrinne (2, 2') mindestens ein Paar benachbarter länglicher Elemente (16, 16') aufweist, die sich entlang der Längsachse der Trasse (2, 2') erstrecken, und
mindestens eine Kopplungsvorrichtungs-Baugruppe (1) gemäß einem der Ansprüche 1 bis 10, wobei die Kopplungsvorrichtungs-Baugruppe (1) angeordnet ist, um in jede Kabelrinne (2, 2') einzugreifen.

12. Ein Verfahren zum Verbinden von zwei Kabelrinnen (2, 2') miteinander, welche Folgendes umfasst:
Ausrichten von zwei Kabelrinnen (2, 2') miteinander in einer durchgehenden Anordnung, derart, dass mindestens ein Paar benachbarter länglicher Elemente (16, 16') jeder Kabelrinne (2, 2') ausgerichtet ist; und
Ineingriffbringung einer Kopplungsvorrichtungs-Baugruppe (1) gemäß einem der Ansprüche 1 bis 10 mit länglichen Elementen (16, 16') jeder benachbarten Kabelrinne (2, 2').

13. Ein Bausatz für ein Kabelrinnensystem, das Folgendes aufweist:
mindestens zwei Kabelrinnen (2, 2'), wobei jede Kabelrinne mindestens zwei längliche Elemente (16, 16') aufweist, die sich parallel zur Längsachse der Trasse (2, 2') erstrecken; und
mindestens eine Kopplungsvorrichtungs-Baugruppe (1) gemäß einem der Ansprüche 1 bis 10.

## Revendications

1. Assemblage de dispositif d'accouplement (1) pour relier l'un à l'autre au moins deux chemins de câbles adjacents, dans lequel l'assemblage comprend :
un dispositif d'accouplement (3) comprenant une première extrémité (4), une seconde extrémité (5) et une portion de mise en contact (6) avec une extrémité de chemin de câble disposée entre la première et la seconde extrémité (4, 5), dans lequel la portion de mise en contact (6) avec une extrémité de chemin de câble est conçue pour recevoir des extrémités adjacentes du premier et du second chemin de câble ; et
au moins un élément rotatif de mise en contact (8) disposé à au moins une des première et seconde extrémités (4, 5) du dispositif d'accouplement (3) ;
dans lequel ledit au moins un élément rotatif de mise en contact (8) est rotatif par rapport au dispositif d'accouplement (3) entre une première position d'écartement dans laquelle ledit au moins un élément rotatif de mise en contact (8) est conçu pour être écarté d'un chemin de câble adjacent, et une seconde position de mise en contact dans laquelle ledit au moins un élément rotatif de mise en contact (8) est conçu pour entrer en contact avec un chemin de câble adjacent ;
**caractérisé en ce que** le dispositif d'accouplement (3) possède un axe longitudinal s'étendant dans une direction s'étendant entre la première et la seconde extrémité (4, 5) du dispositif d'accouplement (3), et dans lequel l'élément rotatif de mise en contact (8) possède un axe longitudinal s'étendant dans une direction s'étendant entre une première extrémité et une seconde extrémité opposée, et dans lequel, dans la première position d'écartement de l'assemblage de dispositif d'accouplement (1), l'axe longitudinal de l'élément rotatif de mise en contact (8) est essentiellement mis en alignement avec l'axe longitudinal du dispositif d'accouplement (3), et dans lequel, dans la seconde position de mise en contact, l'axe longitudinal de l'élément rotatif de mise en contact (8) n'est pas mis en alignement avec l'axe longitudinal du dispositif d'accouplement (3).

2. Assemblage (1) selon la revendication 1, dans lequel l'élément rotatif de mise en contact (8) et le dispositif d'accouplement (3) sont prévus sous la forme de deux composants séparés pour une mise en contact réciproque.

3. Assemblage (1) selon l'une ou l'autre des revendications 1 et 2, dans lequel le dispositif d'accouplement (3) comprend un tronçon de base (10) s'étendant entre la première et la seconde extrémité (4, 5), dans lequel le tronçon de base (10) définit un plan, et dans lequel l'élément rotatif de mise en contact (8) est rotatif autour d'un axe s'étendant essentiellement perpendiculairement au plan du dispositif d'accouplement (3).

4. Assemblage (1) selon l'une quelconque des revendications précédentes, dans lequel le dispositif d'accouplement (3) comprend en outre une paire de portions latérales opposées (17, 18) s'étendant entre la première et la seconde extrémité du dispositif (3), et dans la position de mise en contact, au moins une des première et seconde extrémités (4, 5) de l'élément rotatif de mise en contact (8) s'étend au-delà de la première et/ou de la seconde portion latérale (17, 18) de la portion adjacente du dispositif d'accouplement (1) à l'endroit de l'élément rotatif de mise en contact (8).

5. Assemblage (1) selon l'une quelconque des revendications précédentes, dans lequel l'élément rotatif de mise en contact (8) comprend au moins une fonction de mise en contact (15) pour une mise en contact avec au moins un élément allongé (16) d'un chemin de câble dans la position de mise en contact.

6. Assemblage (1) selon l'une quelconque des revendications précédentes, dans lequel le dispositif d'accouplement (1) comprend au moins une fonction de mise en contact (15) à au moins une extrémité du dispositif (1) ou en position adjacente à ladite extrémité.

7. Assemblage (1) selon la revendication 6, dans lequel le dispositif d'accouplement (3) comprend une paire de portions latérales opposées (17, 18) s'étendant entre la première et la seconde extrémité (4, 5) du dispositif (3), et dans lequel le dispositif (3) comprend au moins une fonction de mise en contact (15) disposée sur au moins une portion latérale (17, 18) à au moins une extrémité du dispositif (3) ou en position adjacente à ladite extrémité.

8. Assemblage (1) selon l'une quelconque des revendications 5 à 7, dans lequel la fonction ou les fonctions de mise en contact (15) définit ou définissent un orifice ouvert configuré pour la réception d'un élément allongé.

9. Assemblage (1) selon l'une quelconque des revendications précédentes, dans lequel le dispositif d'accouplement (3) comprend en outre au moins une fonction de retenue (21) pour retenir l'élément rotatif de mise en contact (8) dans la seconde position de mise en contact.

10. Assemblage (1) selon la revendication 9, dans lequel l'élément rotatif de mise en contact (8) comprend au moins une fonction de mise en alignement pour une mise en contact réciproque avec ladite au moins une fonction de retenue (21) du dispositif d'accouplement (3).

11. Système de chemin de câble (1) comprenant :
au moins deux chemins de câbles (2, 2'), dans lequel chaque chemin de câble (2, 2') comprend au moins une paire d'éléments allongés adjacents (16, 16') s'étendant le long de l'axe longitudinal du chemin (2, 2') ; et
au moins un assemblage de dispositif d'accouplement (1) selon l'une quelconque des revendications 1 à 10, dans lequel ledit assemblage de dispositif d'accouplement (1) est conçu pour entrer en contact avec chaque chemin de câble (2, 2').

12. Procédé pour relier l'un à l'autre deux chemins de câbles (2, 2') comprenant le fait de :
mettre en alignement deux chemins de câbles (2, 2') l'un par rapport à l'autre dans un arrangement bout-à-bout d'une manière telle qu'au moins une paire d'éléments allongés adjacents (16, 16') de chaque chemin de câble (2, 2') est mise en alignement ; et
mettre un assemblage de dispositif d'accouplement (1) selon l'une quelconque des revendications 1 à 10 en contact avec des éléments allongés (16, 16') de chaque chemin de câble (2, 2').

13. Kit pour un système de chemins de câbles, comprenant :
au moins deux chemins de câbles (2, 2'), chaque chemin de câble comprenant au moins deux éléments allongés (16, 16') s'étendant parallèlement à l'axe longitudinal du chemin (2, 2') ; et
au moins un assemblage de dispositif d'accouplement (1) selon l'une quelconque des revendications 1 à 10.
